# EUROPÄISCHE PATENTSCHRIFT

(11) **EP 1 104 793 B1**
(45) Veröffentlichungstag und Bekanntmachung des Hinweises auf die Patenterteilung: **03.09.2003**
(21) Anmeldenummer: 00125854.0
(22) Anmeldetag: 25.11.2000
(51) Int. Cl.: C08J 5/12, C09J 5/02

(54) **Klebeverfahren**
Bonding process
Procédé de collage

(30) Priorität: 02.12.1999 DE 19957971
(43) Veröffentlichungstag der Anmeldung: 06.06.2001
(73) Patentinhaber: Hella KG Hueck & Co., 59552 Lippstadt (DE)
(72) Erfinder: Rohrberg, Simone, 59558 Lippstadt (DE); Temme, Ulrich, Dr., 59555 Lippstadt (DE)

(56) Entgegenhaltungen:
- EP-A- 0 576 062
- US-A- 5 151 342
- US-A- 5 851 637

## Beschreibung

Gegenstand der Erfindung ist ein Verfahren zum Verkleben zweier Klebepartner, von denen wenigstens eine Oberfläche aus Polycarbonat teilweise transparent ist, mittels eines doppelseitigen transparenten Klebebandes.

Verfahren zum Verkleben von insbesondere transparenten Klebepartnern mittels eines doppelseitigen Klebebandes sind im Stand der Technik bereits vorgeschlagen worden. Insbesondere ist im Stand der Technik vorgeschlagen worden, Regen-/Lichtsensoren in Kraftfahrzeugen mit Mineralglasoberfläche an der Innenseite von Kraftfahrzeugscheiben mittels einen doppelseitigen transparenten Klebebandes anzubringen. Von der Firma 3M werden hierzu Hochleistungsverbindungssysteme (VHB™/VHB™⁺-Klebebänder) angeboten, die für hohe, statische, dynamische, thermische und chemische Anforderungen konzipiert sind. Diese zeichnen sich durch ein wesentliches höheres Leistungsvermögen gegenüber herkömmlichen Klebebändern aus. Prinzipiell sind diese Produkte geeignet zum Verbinden gleichartiger oder unterschiedlicher Werkstoffe, wie beispielsweise Metalle, NE-Metalle, Holz, Glas, hochenergetische Kunststoffe (ABS, Polycarbonat, Acrylglas [PMMA], PVC und andere). Auch niederenergetische Kunststoffe wie Polyethylen und Polypropylen können miteinander verbunden werden.

Aus der US 5,151,342 ist es bekannt, zwei Klebepartner, nämlich einen ersten Klebepartner in Form eines transparenten Substrats aus Polycarbonat und einen zweiten Klebepartner in Form einer Farbstoffsicht, über ein Bindemittel miteinander zu verbinden.

Bei der Verklebung von Oberflächen aus Polycarbonat einerseits und Mineralglasoberflächen andererseits treten jedoch im Verlauf der Anwendung der Klebeverbindung gelegentlich gasdesorptionsbedingte Blasen zwischen dem Polycarbonat und dem Klebeband auf.

Zur Überwindung der vorgenannten Nachteile wird erfindungsgemäß ein Verfahren zum Verkleben zweiter Klebepartner (1) und (2) mittels eines doppelseitigen Klebebandes vorgeschlagen, dass dadurch gekennzeichnet ist, dass man auf die wenigstens teilweise transparenten Oberflächen des Klebepartners (1) aus Polycarbonat eine transparente Beschichtung als Haftvermittler und Gasdiffusionssperre aufbringt, die Beschichtung aushärtet und anschließend den beschichteten Klebepartner (1) über das Klebeband mit dem Klebepartner (2) in Kontakt bringt.

Um die gasdesorptionsbedingte Blasenbildung zwischen der teilweise transparenten Oberfläche aus Polycarbonat und dem doppelseitigen Klebeband zu verhindern, wird die Oberfläche aus Polycarbonat zunächst mit einer guthaftenden Beschichtung versehen, die eine Pufferung des Gashaushaltes durch Diffusionssperrwirkung oder Speicherwirkung bedingt. Diese Beschichtung besitzt zusätzlich die notwendige Eigenschaft der Haftungsverbesserung oder Haftungsvermittlung zum Klebeband im Vergleich zur reinen Oberfläche aus Polycarbonat.

Nach Aufbringen und Aushärtung der Beschichtung beispielsweise im Ofen bei erhöhter Temperatur und/oder Bestrahlung insbesondere mit UV-Licht ist sichergestellt, dass es in kritischen Temperaturlagerungstests zu keiner Blasenbildung zwischen der Oberfläche aus Polycarbonat und dem Klebeband mehr kommt.

In umfangreichen Testversuchen wurde beispielsweise gefunden, dass Polysiloxanlacke nicht geeignet sind für die erfindungsgemäße transparente Lackbeschichtung, da diese zu einer Haftungsverschlechterung gegenüber der reinen Oberfläche aus Polycarbonat führen.

Polycarbonat besitzt bekanntermaßen eine hohe Transparenz, neigt jedoch bei hohen Temperaturen dazu, Gase zu desorbieren, die sich in einer störenden Blasenbildung bemerkbar machen.

Im Sinne der vorliegenden Erfindung ist eine Beschichtung aus Polymeren entweder auf die Oberfläche aus Polycarbonat oder auf die zur Verklebung mit der Oberfläche aus Polycarbonat vorgesehenen Fläche des doppelseitigen transparenten Klebebandes aufgebracht.

Bevorzugte Polymere im Sinne der vorliegenden Erfindung sind ausgewählt aus der Gruppe bestehend aus mit Melaminharzen vernetzbaren Acrylharzen, mit Melaminharzen vernetzbaren Alkydharzen, mit Isocyanaten vernetzbare Hydroxylgruppen-haltige Polyester, Polyether, Acrylate, strahlungsvernetzbaren Acrylatharzen, strahlungsvernetzbaren Methacrylatharzen, strahlungsvernetzbaren Urethanacrylaten und/oder strahlungsvernetzbaren Polyesteracrylaten.

Besonders bevorzugt im Sinne der vorliegenden Erfindung werden als doppelseitige Klebebänder Strahlen-vernetzte Acrylatprodukte, beispielsweise der Firma 3M eingesetzt, die unter der Bezeichnung VHB™/VHB™⁺-Klebebänder im Handel erhältlich sind.

Die vorgenannten Polymere der Beschichtung sind besonders gut geeignet, eine feste Verbindung zum doppelseitigen Klebeband zur Verfügung zu stellen, die auch in Warmlagerungstests keine Nachteile aufweist.

Die Schichtdicke der erfindungsgemäßen Lackbeschichtung hat selbstverständlich einen gewissen Einfluss auf die Schälfestigkeit des erfindungsgemäßen Systems. Wird die Schichtdicke zu gering gewählt, so ist eine ausreichende Sperrwirkung durch die Gasdesorption nicht zu erreichen. Eine zu große Schichtdicke verringert die Schälfestigkeit und ist aus ökonomischen Gründen nicht zu empfehlen. Dementsprechend ist es im Sinne der vorliegenden Erfindung besonders bevorzugt, wenn die Lackbeschichtung beispielsweise eine Schichtdicke von 5 bis 50 µm, insbesondere eine Schichtdicke von 10 bis 35 µm aufweist.

Beispiele für Hydroxylgruppen-enthaltende Bindemittel/Harze umfassen unter anderem Polyester wie Desmophen® 650 der Fa Bayer. Die Vernetzung erfolgt mit Isocyanaten, beispielsweise dem aromatischen Desmodur® L der Fa Bayer, bevorzugt mit dem aliphatischen Desmodur® N. Der Vernetzungsgrad liegt vorzugsweise im Bereich von 1 zu 0,5 bis 1 zu 1.5, insbesondere im Bereich von 1 zu 0,9 bis 1 zu 1,1.

Beispiele für Hydroxylgruppen-enthaltende Bindemittel/Harze umfassen weiterhin Polyether wie Desmophen® 900 U der Fa Bayer. Die Vernetzung erfolgt mit Isocyanaten, beispielsweise dem aromatischen Desmodur® L der Fa Bayer, bevorzugter mit dem aliphatischen Desmodur® N. Der Vernetzungsgrad liegt vorzugsweise im Bereich von 1 zu 0,5 bis 1 zu 1.5, insbesondere im Bereich von 1 zu 0,9 bis 1 zu 1,1.

Beispiele für Hydroxylgruppen-enthaltende Bindemittel/Harze umfassen unter anderem Acrylate wie Desmophen ® A 265 der Fa Bayer. Die Vernetzung erfolgt mit Isocyanaten, beispielsweise dem aromatischen Desmodur® L der Fa Bayer, bevorzugter mit dem aliphatischen Desmodur® N. Der Vernetzungsgrad liegt vorzugsweise im Bereich von 1 zu 0,5 bis 1 zu 1.5, insbesondere im Bereich von 1 zu 0,9 bis 1 zu 1,1.

Beispiele für Hydroxylgruppen-enthaltene Bindemittel/Harze umfassen unter anderem Alkydharze. Die Vernetzung erfolgt mittels Melaminharzen, beispielsweise dem Maprenal®MF580 der Fa. Hoechst. Das Mischungsverhältnis liegt vorzugsweise im Bereich 8 : 2 bis 6 : 4, insbesondere im Bereich von 7 : 3; jeweils bezogen auf das Festharz.

Beispiele für Hydroxylgruppen-enthaltene Bindemittel/Harze umfassen unter anderem Acrylatharze wie Alftalat®AC371 der Fa. Hoechst. Die Vernetzung erfolgt mittels Melaminharzen, beispielsweise dem Maprenal®MF580 der Fa. Hoechst. Das Mischungsverhältnis liegt vorzugsweise im Bereich 8 : 2 bis 6 : 4, insbesondere im Bereich von 7 : 3; jeweils bezogen auf das Festharz.

Beispiele für UV-härtbare Lacke umfassen unter anderem radikalisch vernetzende Urethanacrylate wie Ebecryl® 5129 der Fa UCB, radikalisch vernetzende Polyesteracrylate wie Ebecryl® 830 der Fa UCB oder radikalisch vernetzende Reinacrylate wie Ebecryl® 745 der Fa UCB.

Die Aushärtung der Beschichtung vor dem Inkontaktbringen mit dem Klebeband ist von besonderer Bedeutung für die Lösung der vorgenannten Aufgabe. Erfindungsgemäß kann die Aushärtung thermisch und/oder photochemisch durchgeführt werden. Besonders bevorzugt ist es im Sinne der vorliegenden Erfindung die Aushärtung der thermisch vernetzenden Systeme bei einer Temperatur im Bereich von 100 bis 150 °C, insbesondere im Bereich von 120 bis 130 °C durchzuführen.

Die Aushärtung kann vorzugsweise im Verlauf von 10 bis 60 min, insbesondere im Verlauf von 20 bis 40 min durchgeführt werden.

Die Vernetzung der strahlungshärtbaren Lacke erfolgt beispielsweise durch Hg-UV-Strahler. Hierbei ist es von untergeordneter Bedeutung, ob die UV-Strahlung über Elektroden (beispielsweise der Fa IST) oder Mikrowellen (beispielsweise der Fa Fusion) induziert wird. Die Strahlungsleistung sollte vorzugsweise zwischen 60 und 240 W/cm, insbesondere zwischen 80 und 150 W/cm liegen.

Die Strahlungsintensität sollte vorzugsweise im Bereich von 100 mW/cm² bis 2000 mW/cm², insbesondere im Bereich von 300 und 800 mW/cm² liegen. Diese Strahlungsintensitäten sind jeweils bezogen auf den Wellenlängenbereich von 320 bis 390 nm, gemessen mit dem UVIMAP von EIT.

Die Vorschubgeschwindigkeiten liegen vorzugsweise im Bereich von 0,1 bis 10 m/min, insbesondere im Bereich von 1 bis 2 m/min.

Bei den vorgenannten Bedingungen ist sichergestellt, dass es in kritischen Temperaturlagerungstests bei 120°C im Verlauf von 30 min oder bei 90 °C im Verlauf von 24 Stunden zu keiner Blasenbildung zwischen einer thermoplastischen Sensoroberfläche, aus Polycarbonat und dem Klebeband mehr kommt.

Das vorgenannte Verfahren kann vorzugsweise dazu verwendet werden, eine Sensoroberfläche mit einer Oberfläche aus Polycarbonat mit einer transparenten Trägerfläche über ein doppelseitiges transparentes Klebeband zu verbinden. Als Trägerfläche dient beispielsweise eine Glasfläche, insbesondere eine Scheibenfläche eines Kraftfahrzeuges.

### Ausführungsbeispiel:

Um die gasdesorptions-bedingte Blasenbildung einer Sensoroberfläche aus Makrolon® Al 2447 (Polycarbonat) und einem transparentem, strahlenvernetzenden, doppelseitigen Acrylat-Klebeband der Fa 3M der eingangs genannten Art zu verhindern, wurde das Polycarbonat zunächst mit einer Beschichtung aus einem Polyester (Desmophen®650) und einem aliphatischen Isocyanat (Desmodur®N) bei einem Vernetzungsgrad von 1,0 in einer Dicke von etwa 20 µm beschichtet. Anschließend wird die Beschichtung der Polycarbonatoberfläche in einem Ofen bei einer Temperatur im Bereich von 125 bis 130 °C ausgehärtet. Das Klebeband wurde per Hand luftblasenfrei auf die beschichtete Polycarbonatoberfläche ohne weitere Hilfsmittel appliziert.

Es konnte nach dem Verkleben mit dem Klebeband auch im Temperaturlagertest bei 130 °C im Verlauf von 30 min oder bei 90 °C im Verlauf von 24 h keine Blasenbildung zwischen dem Polycarbonat und dem Klebeband beobachtet werden.

## Patentansprüche

1. Verfahren zum Verkleben zweier Klebepartner (1) und (2) mittels eines doppelseitigen Klebebandes,
**dadurch gekennzeichnet, daß** man
a₁) auf die wenigstens teilweise transparenten Oberflächen des Klebepartners (1) aus Polycarbonat eine transparente Beschichtung als Haftvermittler und Gasdiffusionssperre aufbringt,
oder
a₂) auf die zur Verklebung mit dem Klebepartner (1) aus Polycarbonat vorgesehene Fläche des doppelseitigen Klebebandes eine transparente Beschichtung als Haftvermittler und Gasdiffusionssperre aufbringt,
b) die Beschichtung aushärtet,
c₁) anschließend den beschichteten Klebepartner (1) über das Klebeband mit dem Klebepartner (2) in Kontakt bringt,
oder
c₂) anschließend den Klebepartner (1) über das beschichtete Klebeband mit dem Klebepartner (2) in Kontakt bringt,
wobei
d) für die Beschichtung keine Polysiloxanlacke verwendet werden.

2. Verfahren nach Anspruch 1, **dadurch gekennzeichnet, dass** man die Beschichtung umfassend eines oder mehrere Polymere, ausgewählt aus der Gruppe bestehend aus mit Melaminharzen vemetzbaren Acrylharzen, mit Melaminharzen vernetzbaren Alkydharzen, mit Isocyanaten vernetzbare Hydroxylgruppen-haltige Polyester, Polyether, Acrylate, strahlungsvernetzbaren Acrylatharzen, strahlungsvernetzbaren Methacrylatharzen, strahlungsvernetzbaren Urethanacrylaten und/oder strahlungsvernetzbaren Polyesteracrylaten einsetzt.

3. Verfahren nach Anspruch 1 oder 2, **dadurch gekennzeichnet, dass** man die Beschichtung in einer Schichtdicke von 5 bis 50 µm, insbesondere in einer Schichtdicke von 10 bis 35 µm anbringt.

4. Verfahren nach einem der Ansprüche 1 bis 3, **dadurch gekennzeichnet, dass** man die Aushärtung der Beschichtung thermisch und/oder photochemisch durchführt.

5. Verfahren nach Anspruch 4, **dadurch gekennzeichnet, dass** man die thermische Aushärtung bei einer Temperatur im Bereich von 100 bis 150 °C, insbesondere im Bereich von 120 bis 130 °C im Verlauf von 10 bis 60 min, insbesondere im Verlauf von 20 bis 40 min durchführt.

6. Verfahren nach Anspruch 4, **dadurch gekennzeichnet, dass** man die photochemische Aushärtung bei UV-Bestrahlung, insbesondere bei einer Strahlungsintensität im Bereich von 100 mW/cm² bis 2000 mW/cm² und einer Vorschubgeschwindigkeit von 0,1 bis 10 m/min durchführt.

7. Verfahren nach einem der Ansprüche 4 bis 6, **dadurch gekennzeichnet, dass** man die beschichtete Oberfläche aus Polycarbonat nach der Härtung der Beschichtung mit einem doppelseitigen transparenten Klebeband, insbesondere auf der Basis von strahlungsvernetzten Acrylaten in Kontakt bringt.

8. Verfahren nach einem der Ansprüche 1 bis 7, **dadurch gekennzeichnet, dass** man eine Sensoroberfläche mit einer Oberfläche aus Polycarbonat mit einer transparenten Trägerfläche über ein doppelseitiges transparentes Klebeband verklebt.

9. Verfahren nach Anspruch 8, **dadurch gekennzeichnet, dass** man als Trägerfläche eine Glasfläche, insbesondere eine Scheibenfläche eines Kraftfahrzeuges einsetzt.

## Claims

1. Method for bonding two bonding partners (1) and (2) by means of a double-sided adhesive tape, **characterised in that**
a₁) a transparent coating is applied as adhesion promoter and gas diffusion barrier to the at least partially transparent surfaces of the bonding partner (1) made of polycarbonate, or
a₂) a transparent coating is applied as adhesion promoter and gas diffusion barrier to the surface of the double-sided adhesive tape for bonding with the bonding partner (1) made of polycarbonate,
b) the coating is hardened,
c₁) subsequently the coated bonding partner (1) is brought, via the adhesive tape, into contact with the bonding partner (2), or
c₂) subsequently the bonding partner (1) is brought, via the coated adhesive tape, into contact with the bonding partner (2), whereby
d) polysiloxane lacquers are not used for the coating.

2. Method according to Claim 1, **characterised in that** the coating comprises one or more polymers selected from the group consisting of acrylic resins curable with melamine resins, alkyd resins curable with melamine resins, polyesters containing hydroxyl groups and curable with isocyanates, polyethers, acrylates, acrylate resins curable with radiation, methacrylate resins curable with radiation, urethane acrylates curable with radiation and/or polyester acrylates curable with radiation.

3. Method according to Claim 1 or 2, **characterised in that** the coating is applied with a layer thickness of between 5 and 50 µm, in particular, in a layer thickness of between 10 and 35 µm.

4. Method according to one of the claims 1 to 3, **characterised in that** the hardening of the coating is carried out thermally and/or photochemically.

5. Method according to Claim 4, **characterised in that** the thermal hardening takes place at a temperature in the range of between 100° and 150°C, in particular, in the range of between 120° and 130°C over a period of between 10 and 60 minutes, in particular over a period of between 20 and 40 minutes.

6. Method according to Claim 4, **characterised in that** the photochemical hardening is carried out under UV irradiation, in particular, at a radiation intensity in the range of between 100 mW/cm² and 2000 mW/cm² and a feed rate of between 0.1 m/min and 10 m/min.

7. Method according to one of the claims 4 to 6, **characterised in that**, after hardening of the coating, the coated surface made of polycarbonate is brought into contact with a double-sided transparent adhesive tape, in particular, based on radiation-cured acrylates.

8. Method according to one of the claims 1 to 7, **characterised in that** a sensor surface with a surface made of polycarbonate is bonded, via a double-sided transparent adhesive tape, to a transparent substrate surface.

9. Method according to Claim 8, **characterised in that** a glass surface, in particular, a pane surface of a motor vehicle is used as the substrate surface.

## Revendications

1. Procédé pour coller deux partenaires de collage (1) et (2) au moyen d'un ruban adhésif double face, **caractérisé en ce que**
a₁) on applique sur les surfaces au moins partiellement transparentes du partenaire de collage (1) en polycarbonate un revêtement transparent à titre de promoteur d'adhésion et de barrière de diffusion gazeuse,
ou bien
a₂) on applique sur la surface du ruban adhésif double face qui est prévue pour le collage avec le partenaire de collage (1) en polycarbonate un revêtement transparent à titre de promoteur d'adhésion et de barrière de diffusion gazeuse,
b) on durcit le revêtement,
c₁) puis on met en contact le partenaire de collage (1) revêtu avec le partenaire de collage (2) par le biais du ruban adhésif,
ou bien
c₂) on met en contact le partenaire de collage (1) avec le partenaire de collage (2) par le biais du ruban adhésif revêtu,
d) sans utiliser de vernis de polysiloxane pour le revêtement.

2. Procédé selon la revendication 1, **caractérisé en ce que** l'on utilise le revêtement incluant un ou plusieurs polymères choisis dans le groupe consistant en les résines acryliques réticulables avec des résines de mélamine, les résines alkydes réticulables avec des résines de mélamine, les polyesters, polyéthers, acrylates contenant des groupes hydroxyle réticulables avec des isocyanates, les résines d'acrylate réticulables par rayonnement, les résines de méthacrylate réticulables par rayonnement, les uréthane-acrylates réticulables par rayonnement et/ou les polyester-acrylates réticulables par rayonnement.

3. Procédé selon la revendication 1 ou 2, **caractérisé en ce que** l'on applique le revêtement en une épaisseur de couche de 5 à 50 µm, en particulier en une épaisseur de couche de 10 à 35 µm.

4. Procédé selon l'une des revendications 1 à 3, **caractérisé en ce que** l'on réalise le durcissement du revêtement par voie thermique et/ou photochimique.

5. Procédé selon la revendication 4, **caractérisé en ce que** l'on réalise le durcissement thermique à une température dans le domaine de 100 à 150°C, en particulier dans le domaine de 120 à 130°C en une durée de 10 à 60 min, en particulier en une durée de 20 à 40 min.

6. Procédé selon la revendication 4, **caractérisé en ce que** l'on réalise le durcissement photochimique par irradiation UV, en particulier à une intensité de rayonnement dans le domaine de 100 mW/cm² à 2 000 mW/cm² et à une vitesse d'avance de 0,1 à 10 m/min.

7. Procédé selon l'une des revendications 4 à 6, **caractérisé en ce que** l'on met en contact la surface revêtue en polycarbonate après le durcissement du revêtement avec un ruban adhésif transparent double face, en particulier à base d'acrylates réticulés par rayonnement.

8. Procédé selon l'une des revendications 1 à 7, **caractérisé en ce que** l'on colle une surface de détecteur avec une surface en polycarbonate avec une surface de support transparente par le biais d'un ruban adhésif transparent double face.

9. Procédé selon la revendication 8, **caractérisé en ce que** l'on utilise comme surface de support une surface en verre, en particulier une surface de vitre d'un véhicule automobile.
